# EUROPEAN PATENT SPECIFICATION

(11) **EP 0 421 204 B1**
(45) Date of publication and mention of the grant of the patent: **21.08.1996**
(21) Application number: 90118133.9
(22) Date of filing: 20.09.1990
(51) Int. Cl.: H02H 3/093, H02H 1/06

(54) **An overcurrent protection apparatus**
Überstromschutz
Appareil de protection contre la surintensité

(30) Priority: 04.10.1989 JP 257876/89
(43) Date of publication of application: 10.04.1991
(60) Divisional application: 95113775.1
(73) Proprietor: MITSUBISHI DENKI KABUSHIKI KAISHA, Chiyoda-ku Tokyo-to, 100 (JP)
(72) Inventor: Ishi, Kazuhiro, 1-8, Midorimachi, Fukuyama-shi, 720 (JP); Hirotsune, Kouji, 1-8, Midorimachi, Fukuyama-shi, 720 (JP)
(74) Representative: Bohnenberger, Johannes, Dr.

(56) References cited:
- EP-A- 0 130 254
- CH-A- 558 098
- FR-A- 2 052 906
- FR-A- 2 215 736
- US-A- 3 818 275

## Description

The present invention relates generally to overcurrent protection apparatus and, more particularly, to an overcurrent protection apparatus which includes circuit breaker means.

The European patent application EP-A-0 130 254 discloses an overcurrent protection apparatus as specified in the preamble of claim 1, comprising a current transformer, a rectifier for rectifying the output current of the current transformer and circuit breaker means for disconnecting the alternating current line from a power source. Switching means and a resistor are connected in series across the positive and negative outputs of the rectifier. A capacitor is coupled across the switching means through a diode for avoiding DC current flow from the capacitor to the rectifier. A reference voltage generator is provided for generating a reference voltage. The duty ratio of the switching means is controlled in proportion to the output voltage of the rectifier in an output voltage range above the reference voltage. The circuit breaker means are adapted to disconnect the AC electric line when the voltage across the resistor exceeds a predetermined value.

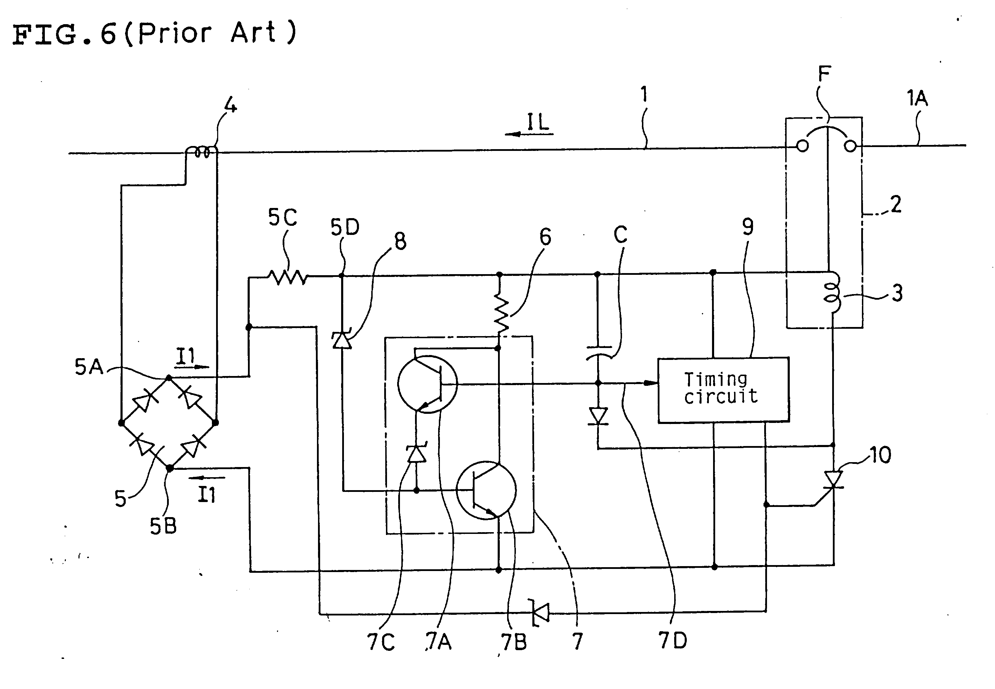

Fig. 6 is a circuit diagram of another overcurrent protection apparatus according to the prior art disclosed in the U.S. Patent No. 3,818,275. Referring to Fig. 6, an electric line 1 is connected to a power source line 1A of an alternating current through a switch F of a circuit breaker 2. The current IL of the electric line 1 is detected by a current transformer 4 (hereinafter abbreviated as CT). The output of the CT 4 is rectified by a full wave bridge rectifier circuit 5, and a DC voltage is output from terminals 5A and 5B.

A resistor 6 and a control circuit 7 are coupled in series across the terminals 5A and 5B through a resistor 5C.

The control circuit 7 comprises two transistors 7A and 7B, which are coupled at both their collectors to the resistor 6, and a Zener diode 7C. The emitter of the transistor 7A is coupled to the base of the transistor 7B through the Zener diode 7C, which is connected at its cathode to the emitter of the transistor 7A. The emitter of the transistor 7B is coupled to the terminal 5B. Another Zener diode 8 is coupled between the junction 5D between the resistors 5C and 6 and the base of the transistor 7B with the cathode of the Zener diode 8 connected to the junction 5D. The base of the transistor 7A is connected to an input 7D of a timing circuit 9. The Zener diode 8 serves to limit the voltage of the junction 5D to a predetermined voltage which is determined by the Zener voltage of the Zener diode 8.

The timing circuit 9 is coupled across the junction 5D and the terminal 5B, from which the electric power is supplied to the timing circuit 9. A series connection of a trip coil 3 and a thyristor 10 is coupled across the junction 5D and the terminal 5B. The cathode of the thyristor 10 is connected to the terminal 5B. The gate of the thyristor 10 is connected to the output of the timing circuit 9.

A capacitor C is coupled between the junction 5D and the input 7D of the timing circuit 9.

In operation, the current IL flowing in the electric line 1 is detected by the CT 4. The output of the CT 4 is rectified by the full wave bridge rectifier 5, and a DC voltage is output at both the terminals 5A and 5B.

When the current IL is lower then a predetermined rated current, the DC voltage across the junction 5D and the terminal 5B is lower than the Zener voltage of the Zener diode 8 and no current flows through the Zener diode 8. A current flows through the resistor 6 and the control circuit 7. The voltage across the input 7D and the terminal 5B is held at a constant value which is determined by the Zener voltage of the Zener diode 7C. On the other hand, the voltage across the junction 5D and the input 7D varies in response to the current IL of the electric line 1, since the current which flows through the resistor 6 and the control circuit 7 varies. Consequently, the electric power consumption in the resistor 6 and the control circuit 7 varies, most of the electric power in the control circuit 7 being consumed by the Zener diode 7C.

When the current IL increases and exceeds the rated current, the voltage across the junction 5D and the input 7D exceeds a predetermined threshold voltage of the timing circuit 9, and the timing circuit 9 is activated. After a predetermined time period which is set in the timing circuit 9, the output is applied to the gate of the thyristor 10 and the thyristor 10 turns ON. Hence the trip coil 3 of the circuit breaker 2 is excited and the switch F is opened.

In the control circuit 7 of the circuit interrupter in Fig. 6, a current detected by the current transformer flows into the resistor 6 and the control circuit 7, and the electric power is consumed by the resistor 6 and the Zener diode 7C in order to maintain the constant voltage at the input 7D of the timing circuit 9. Consequently, the resistor 6 and the diode 7C are heated. Thus, a heat radiator means must be provided for the control circuit 7 and as a result the circuit interrupter cannot be miniaturized.

An object of the present invention is to provide an overcurrent protection apparatus which has improved electric power consumption and which can be miniaturized.

According to the present invention there is provided an overcurrent protection apparatus as defined in claim 1.

The present invention will now be described by way of example with reference to the accompanying drawings, in which:
Fig. 1 is a circuit diagram of an overcurrent protection apparatus not belonging to the present invention;
Figs. 2(a), 2(b), 2(c) and 2(d) are waveforms generated during the operation of the circuit of Fig.1;
Fig. 3 is a circuit diagram of a second overcurrent protection apparatus not belonging to the present invention;
Figs. 4(a), 4(b), 4(c) and 4(d) are waveforms generated during operation of the circuit of Fig.3;
Fig. 5 is a circuit diagram of an embodiment of the present invention; and
Fig. 6 is a circuit diagram of a prior art overcurrent protection apparatus.

It will be recognized that the circuit diagrams are schematic representations for purposes of illustration and do not necessarily depict the actual relative sizes or locations of the elements shown.

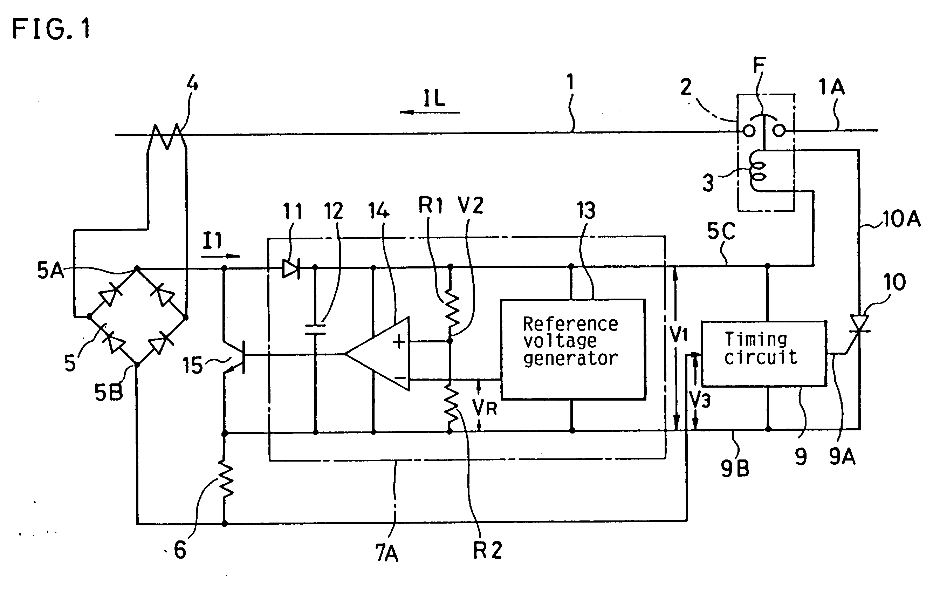

Fig. 1 is a circuit diagram of an overcurrent protecting apparatus not part of the present invention. With reference thereto an electric line 1 is connected to a power source line 1A of an alternating current through a switch F of a circuit breaker 2. A current IL of the electric line 1 is detected by a current transformer 4. The output of the current transformer 4 is rectified by a full wave bridge rectifier 5.

A series connection of a transistor 15 and a resistor 6 is coupled across a positive terminal 5A and a negative terminal 5B of the rectifier 5. A control circuit 7A is coupled in parallel with the transistor 15. A timing circuit 9 is coupled across a positive power source line 5C and a negative power source line 9B of the control circuit. The timing circuit 9 is activated when the absolute value of a negative input voltage V3 across the negative power source line 9B and the negative terminal 5B exceeds a predetermined voltage VT. The delay time of the timing circuit 9 varies in accordance with the negative input voltage V3. The timing circuit 9 is provided with a filter circuit therein, and the pulsating input voltage V3 is filtered.

The output 9A of the timing circuit 9 is connected to the gate of a switch means or a thyristor 10. The thyristor 10 turns ON when the timing circuit 9 finishes time counting operation. A trip coil 3 of the circuit breaker 2 is connected between the positive power source line 5C and the anode of the thyristor 10, and is excited in the conductive state of the thyristor 10. The switch F is disconnected by the excitation of the trip coil 3. A diode 11 interrupts the current flow from the positive power source line 5C to the positive terminal 5A. A capacitor 12 serves as a filter.

A reference voltage generator 13 generates a predetermined reference voltage. The reference voltage is applied to the invert input (-) of a comparator 14. The voltage V1 at the line 5C is divided into a suitable voltage V2 by a dividing network of resistors R1 and R2. The voltage V2 is applied to the noninvert input (+) of the comparator 14. The output of the comparator 14 is applied to the base of the transistor 15.

The operation of this circuit will now be described.

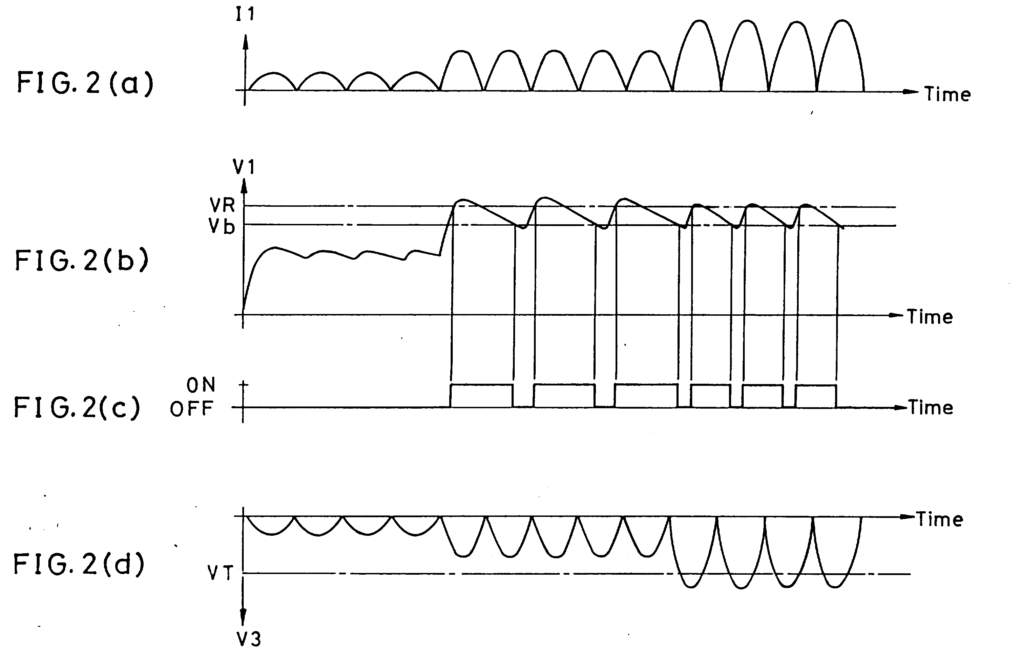

Figs. 2(a), 2(b), 2(c) and 2(d) are waveforms generated during operation. A current IL of the electric line 1 is detected by the current transformer 4, and the output of the current transformer 4 is rectified by the rectifier 5.

The waveform of the output current I1 from the positive terminal 5A and to the negative terminal 5B of the rectifier 5 is shown in FIG. 2(a). The output current I1 flows into the line 5C through the diode 11. The waveform of the voltage V2 is shown in FIG. 2(b). Referring to FIG 2(b), the reference voltage VR of the reference voltage generator 13 is shown by an alternately long- and short-dashed line. A voltage Vb which is lower than the voltage VR is shown by alternate long and two short dashed line. When a voltage V2, which is applied to the comparator 14 at the noninvert input (+), exceeds the reference voltage VR the output of the comparator 14 appears. Since the comparator 14 generally has hysteresis, when the voltage which is applied to the noninvert input (+) is decreased to less than the voltage Vb, the output of the comparator 14 disappears.

When the current IL is far lower than a predetermined rated current, the voltage V2 is lower than the reference voltage VR.

When the current IL increases in the vicinity of the rated current and the voltage V2 exceeds the reference voltage VR, the comparator 14 supplies an output to the base of the transistor 15. Consequently, the transistor 15 turns ON as shown in FIG. 2(c) and the positive terminal 5A is short-circuited with the line 9B. Thereafter, the electric charge in the capacitor 12 is discharged through the comparator 14, the reference voltage generator 13, the timing circuit 9 and the resistors R1 and R2, so that the voltage V2 gradually falls. When the voltage V2 reaches the voltage Vb, the output of the comparator disappears and the transistor 15 turns OFF. Therefore, the current in the transistor 15 and the resistor 6 disappears and the voltage at the point 5A rises. The above-mentioned operation is thus repeated and the voltage V2 is limited to a voltage which is higher than the reference voltage VR. Consequently, the duty ratio of the transistor 15 is varied in accordance with the voltage across the terminals 5A and 5B.

Further increase of the current IL over the rated current results in an increase of the current flowing in the resistor 6. Consequently, the absolute value of the negative voltage V3 increases as shown in Fig 2(d). When the voltage V3 exceeds the operation voltage VT of the timing circuit 9, the time counting operation of the timing circuit 9 is started. After a predetermined time period which is set in the timing circuit 9, the output thereof is applied to the gate of the thyristor 10. Thus the thyristor 10 turns ON and the trip coil 3 is excited. Hence, the switch F is opened and the electric line 1 is disconnected from the power source line 1A.

In this first circuit, increase of the voltage V1 is limited by short-circuiting the terminal 5A and the line 9B from which electric power is supplied to the control circuit 7A. The electric power consumption in the control circuit 7 is comparatively low because the reference voltage generator and the comparator are composed of electronic components which consume little electric power. Therefore, the current flowing in the resistor 6 is comparatively lower so that the electric power consumption of the resistor 6 is comparatively lower when the terminal 5A and the line 9B are short-circuited by the conductive state of the transistor 15. Hence, only a small size resistor is required.

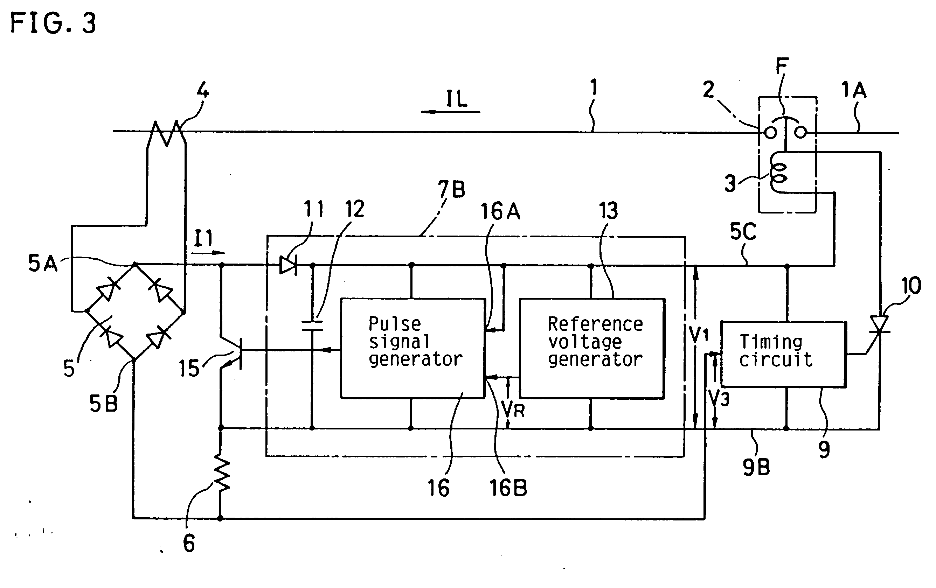

Fig. 3 is a circuit diagram of a second circuit, also not being part of the present invention. In this second circuit, the comparator 14 of the first circuit is replaced by a pulse signal generator 16. The remaining components function in the same manner as in the first circuit and are designated by the same reference numerals as used in Fig. 1. The pulse signal generator 16 generates a square wave signal, the duty ratio varying in accordance with an input voltage which is applied to a terminal 16A thereof. The reference voltage VR is applied to the other input terminal 16B.

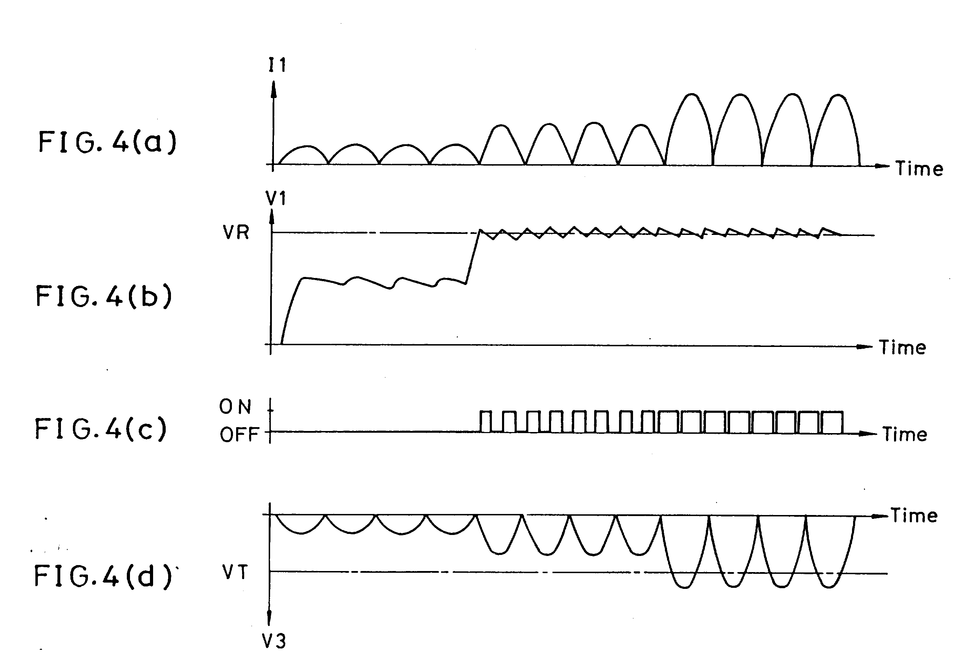

The operation of the second circuit will now be described with reference to Figs 4(a), 4(b), 4(c) and 4(d). Fig. 4(a) is a waveform of the output of the rectifier 5. Fig. 4(b) is a waveform of a voltage V1 across the lines 5C and 9B, and Fig. 4(c) is a diagram representing the switching operation of the transistor 15. The diagram shown in Fig. 4(c) is substantially identical to the output waveform of the pulse signal generator 16 but the cycle period of the switching operation is shorter than that of the first embodiment, and the duty ratio of the output of the pulse signal generator 16 is increased in proportion to the increase of the output voltage of the rectifier 5. By means of the switching operation, even if the output of the rectifier 5 increases, the voltage V1 is held to a voltage which is close to the reference voltage VR as shown in Fig. 4(b). The operation of the timing circuit 9, thyristor 10 and circuit breaker 2 is identical with that of the first circuit.

In the second circuit, since the cycle period of the switching operation is shorter than that of the first circuit, the capacitance of the filter capacitor 12 can be reduced.

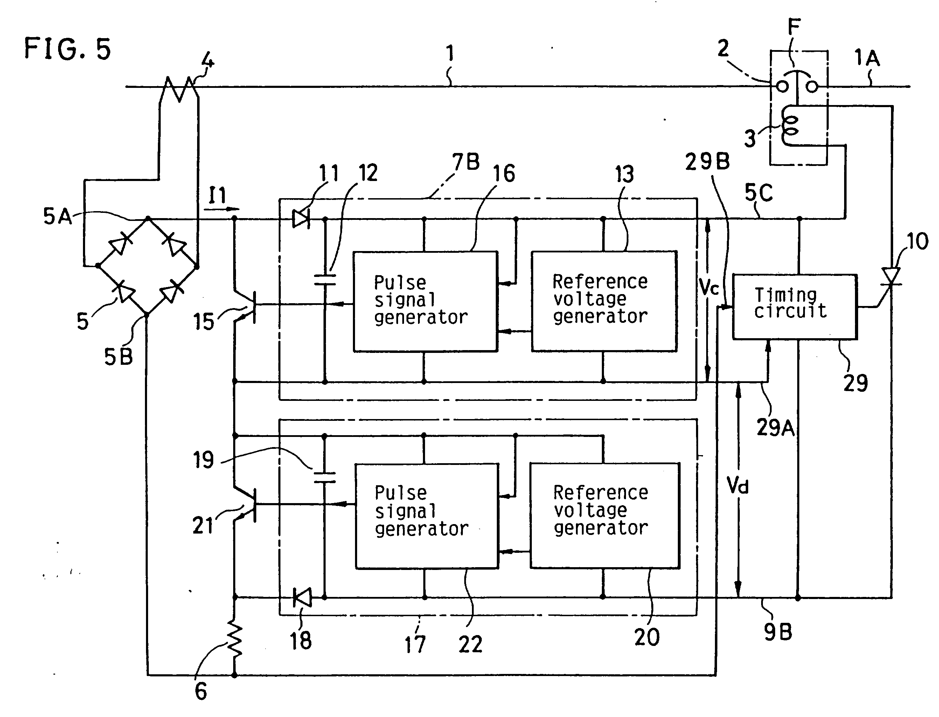

Fig. 5 is a circuit diagram of an embodiment of the overcurrent protection apparatus in accordance with the present invention. A timing circuit 29 is provided with two input terminals 29A and 29B for receiving differential inputs. A positive input Vc is applied across a positive power input terminal connected to the line 5C and the input terminal 29A, and a negative input Vd is applied across a negative power input terminal connected to the line 9B and the input terminal 29A. The input terminal 29B is connected to the negative terminal 5B of the rectifier 5. Two control circuits 7B and 17 are provided for supplying the positive inputs Vc and negative input Vd, respectively. Transistors 15 and 21 are coupled to the control circuits 7B and 17, respectively.

In this embodiment, since the timing circuit 29 is activated by the differential input, the accuracy of detection of an overcurrent is improved.

In the above-mentioned embodiment, though one of plural electric lines (for example, the three electric lines of three phase electric lines) is shown in the respective figure, the protection apparatus in accordance with the present invention can be applicable to plural electric lines.

Although the invention has been described in a preferred form, it is to be understood that the construction, combination and arrangement of parts thereof can be changed without departing from the scope of the invention as hereinafter claimed.

## Claims

1. An overcurrent protection apparatus comprising a current transformer (4) for detecting a current of an alternating current electric line (1), a rectifier (5) for rectifying the output current of said current transformer (4), a first switching means (15) and a resistor (6) connected in series across the positive output (5A) and the negative output (5B) of said rectifier (5), circuit breaker means (2, 10) for disconnecting said alternating current electric line (1) from an electric power source line (1A) when the voltage across said resistor (6) exceeds a predetermined value, a first capacitor (12) coupled across said first switching means (15) through a first diode means (11) for interrupting the DC current flow from said first capacitor (12) to said rectifier (5), a first reference voltage generator (13) for generating a predetermined reference voltage, and a first pulse signal generator (16) generating a signal controlling the operation of said first switching means (15) in accordance with a duty ratio which varies in proportion to the voltage across said first capacitor (12) when said voltage across said first capacitor exceeds said reference voltage,
characterized in that said protection apparatus further comprises:
a second switching means (21) connected in series with said first switching means (15) and said resistor (6) across the positive output (5A) and the negative output (5B) of said rectifier (5), a second capacitor (19) coupled across said second switching means (21) through a second diode means (18) for interrupting the DC current flow from said second capacitor (19) to said rectifier (5), a second reference voltage generator (20) for generating a predetermined second reference voltage, and a second pulse signal generator (22) generating a signal controlling the operation of said second switching means (21) in accordance with a duty ratio which varies in proportion to the voltage across said second capacitor (19) when said voltage across said second capacitor exceeds said second reference voltage.

## Patentansprüche

1. Überstrom-Schutzvorrichtung, die folgendes aufweist: einen Stromwandler (4), um einen Strom einer Wechselstromleitung (1) zu detektieren, einen Gleichrichter (5), um den Ausgangsstrom des Stromwandlers (4) gleichzurichten, eine erste Schalteinrichtung (15) und einen Widerstand (6), die in Reihe über den positiven Ausgang (5A) und den negativen Ausgang (5B) des Gleichrichters (5) geschaltet sind, einen Leistungsschalter (2, 10) zum Trennen der Wechselstromleitung (1) von einer Stromversorgungsleitung (1A), wenn die Spannung über dem Widerstand (6) einen vorbestimmten Wert überschreitet, einen ersten Kondensator (12), der durch eine erste Diodeneinrichtung (11) über die erste Schalteinrichtung (15) geschaltet ist, um den Gleichstromfluß von dem ersten Kondensator (12) zu dem Gleichrichter (5) zu unterbrechen, einen ersten Referenzspannungsgenerator (13) zum Erzeugen einer vorbestimmten Referenzspannung, und einen ersten Impulssignalgenerator (16), der ein Signal erzeugt, um den Betrieb der ersten Schalteinrichtung (15) nach Maßgabe eines Tastverhältnisses zu steuern, das sich proportional zu der Spannung über dem ersten Kondensator (12) ändert, wenn die Spannung über dem ersten Kondensator die Referenzspannung überschreitet,
dadurch gekennzeichnet, daß die Überstrom-Schutzvorrichtung außerdem folgendes aufweist:
eine zweite Schalteinrichtung (21), die in Reihe mit der ersten Schalteinrichtung (15) und dem Widerstand (6) über den positiven Ausgang (5A) und den negativen Ausgang (5B) des Gleichrichters (5) geschaltet ist, einen zweiten Kondensator (19), der durch eine zweite Diodeneinrichtung (18) über die zweite Schalteinrichtung (21) geschaltet ist, um den Gleichstromfluß von dem zweiten Kondensator (19) zu dem Gleichrichter (5) zu unterbrechen, einen zweiten Referenzspannungsgenerator (20) zum Erzeugen einer vorbestimmten zweiten Referenzspannung, und einen zweiten Impulssignalgenerator (22), der ein Signal erzeugt, um den Betrieb der zweiten Schalteinrichtung (21) nach Maßgabe eines Tastverhältnisses zu steuern, das sich proportional zu der Spannung über dem zweiten Kondensator (19) ändert, wenn die Spannung über dem zweiten Kondensator die zweite Referenzspannung überschreitet.

## Revendications

1. Dispositif de protection contre les surintensités comprenant un transformateur de courant (4) pour détecter un courant d'une ligne électrique de courant alternatif (1), un redresseur (5) pour redresser le courant de sortie dudit transformateur du courant (4), un premier moyen de commutation (15) et une résistance (6) reliée en série à travers la sortie positive (5A) et la sortie négative (5B) dudit redresseur (5), un moyen interrupteur de circuit (2, 10) pour déconnecter ladite ligne électrique de courant alternatif (1) d'une ligne de source d'alimentation électrique (1A) lorsque la tension à travers ladite résistance (6) excède une valeur prédéterminée, un premier condensateur (12) couplé à travers ledit premier moyen de commutation (15) par un premier moyen formant diode (11) pour interrompre la circulation de courant continu dudit premier condensateur (12) audit redresseur (5), un premier générateur de tension de référence (13) pour produire une tension de référence prédéterminée et un premier générateur de signaux d'impulsion (16) produisant un signal commandant le fonctionnement dudit premier moyen de commutation (15) selon un rapport cyclique qui varie en proportion à la tension à travers ledit premier condensateur (12) lorsque ladite tension à travers ledit premier condensateur excède ladite tension de référence,
caractérisé en ce que ledit dispositif de protection comprend de plus :
un second moyen de commutation (21) relié en série audit premier moyen de commutation (15) et ladite résistance (6) à travers la sortie positive (5A) et la sortie négative (5B) dudit redresseur (5), un second condensateur (19) couplé à travers ledit second moyen de commutation (21) par un second moyen formant diode (18) pour interrompre la circulation de courant continu dudit second condensateur (19) audit redresseur (5), un second générateur de tension de référence (20) pour produire une seconde tension de référence prédéterminée, et un second générateur de signaux d'impulsion (22) produisant un signal commandant le fonctionnement dudit second moyen de commutation (21) selon un rapport cyclique qui varie en proportion à la tension à travers ladit second condensateur (19) lorsque ladite tension à travers ledit second condensateur excède ladite seconde tension de référence.
